# FASCICULE DE BREVET EUROPEEN

(11) **EP 0 763 503 B1**
(45) Date de publication et mention de la délivrance du brevet: **28.03.2001**
(21) Numéro de dépôt: 96401705.7
(22) Date de dépôt: 31.07.1996
(51) Int. Cl.: C03B 5/185, C03B 5/193, C03B 5/20

(54) **Dispositif pour la fusion de matières vitrifiables**
Vorrichtung zum Schmelzen von glasartigen Materialien
Apparatus for melting glassy materials

(30) Priorité: 03.08.1995 FR 9509484
(43) Date de publication de la demande: 19.03.1997
(73) Titulaire: SAINT-GOBAIN GLASS FRANCE, 92400 Courbevoie (FR)
(72) Inventeur: Moreau, Raymond, F-78290 Croissy sur Seine (FR)
(74) Mandataire: Renous Chan, Véronique

(56) Documents cités:
- GB-A- 1 043 447
- GB-A- 2 169 891
- LU-A- 77 649
- SU-A- 514 775
- US-A- 3 888 650

## Description

L'invention concerne un dispositif pour la fusion et l'affinage de verre à partir de matières vitrifiables, dispositif appelé plus communément four de fusion, en vue d'alimenter en verre fondu, en continu, des installations de formage de verre plat comme des installations float ou de laminage.

L'invention s'intéresse plus particulièrement aux fours de fusion pour le verre plat impliquant des capacités de production importantes, capacité pouvant se chiffrer, par exemple, par des tirées d'au moins 100 tonnes/jour et pouvant aller jusqu'à 1000 tonnes/jour et plus. Cependant, elle s'applique aussi avantageusement à des fours de moindre taille.

Elle concerne davantage les fours dits à " flammes " c'est-à-dire dont la puissance de chauffe est fournie par des brûleurs, comme décrit dans les brevets US-A-4 599 100 ou EP-A-0 650 934, que les fours dits "à voûte froide" où la puissance de chauffe est entièrement fournie par les électrodes immergées dans le bain de verre fondu, tels qu'illustrés par exemple par le document SU-A-514 775.

Une structure usuelle de fours à flammes comporte, de manière connue, une succession de compartiments débouchant les uns dans les autres et ayant chacun des fonctions et des dimensions spécifiques, afin de garantir la fusion des matières vitrifiables ainsi que l'homogénéité thermique et chimique du verre une fois fondu.

Il est ainsi connu du brevet EP-B-0 264 327 une structure de four de fusion comprenant un premier compartiment où s'effectuent la fusion et l'affinage de la composition verrière, suivi d'un goulot d'étranglement désigné sous le terme de corset.

Ce corset débouche dans un second compartiment où s'effectue l'homogénéisation, notamment thermique, du verre fondu, compartiment connu sous le terme de braise et qui débouche dans un canal d'écoulement de section beaucoup plus réduite qui déverse le verre fondu vers l'installation de formage adéquate.

Une préoccupation constante dans la conception et le fonctionnement de fours de fusion concerne la connaissance et la maîtrise des flux convectifs qui animent la masse de verre fondu, tout particulièrement dans les compartiments où s'effectuent la fusion et l'affinage.

En effet, en fonction de nombreux paramètres comme la géométrie du four et le mode de chauffe, s'établissent dans le verre fondu des courroies de recirculation convective, par le jeu des modifications de masse volumique du verre selon son degré d'échauffement. Or les caractéristiques de ces courroies de recirculation, notamment leur taille, leur localisation, leur cinétique ou leur stabilité, influent directement sur les performances du four, par exemple sur sa consommation énergétique, sa tirée ou la qualité de verre produit.

Ainsi, dans un four à flammes, on est en présence, en général, de deux courroies principales successives, dans le compartiment de fusion et d'affinage, l'une située en zone amont, là où s'effectue la fusion progressive des matières vitrifiables surnageantes, l'autre située en zone aval où s'effectue l'essentiel de l'affinage du verre. La zone commune les séparant, où « remonte » le verre des deux courroies est désignée sous les termes de zone de résurgence, zone source, ou encore « point chaud », par opposition aux extrémités opposées des deux courroies appelées « points froids ».

Différentes études ont déjà été menées pour contrôler ces flux convectifs. Ainsi, en vue de diminuer la consommation énergétique d'un four à flammes, le brevet US-A-3 536 470 a proposé d'installer dans le compartiment de fusion/affinage un seuil transversal, c'est-à-dire un mur refroidi intérieurement, disposé sur la sole et de faible hauteur, en travers de la longueur du compartiment. Ce mur permettrait de diminuer la quantité de verre des courroies de recirculation qui « remonte » vers le point chaud et qui appartient donc à ce qu'on appelle les courants « de retour », il diminuerait ainsi d'autant la puissance calorifique pour chauffer à nouveau ce verre " plus froid ".

Cependant, si ce mur peut affecter le débit de ces courants de retour en agissant comme un frein, il ne permet pas, à lui seul, un contrôle des flux convectifs, notamment sur la localisation du point chaud.

L'invention a alors pour but de pallier cette insuffisance, en proposant un nouveau type de four qui permette une meilleure maîtrise des flux convectifs dans le compartiment de fusion et d'affinage.

L'invention a pour objet un four pour la fusion de matières vitrifiables comportant des moyens primaires de chauffage, un compartiment de fusion et d'affinage du verre, muni, en amont, d'au moins un moyen d'alimentation en matières vitrifiables et débouchant, en aval, dans un compartiment ou une succession de compartiments destiné(s) à conduire le verre fondu jusqu'à la zone de formage.

Ce compartiment de fusion et d'affinage est muni d'un premier moyen de contrôle des flux convectifs animant la masse de verre fondu, sous la forme d'un seuil transversal délimitant une zone " amont " et une zone " aval " dans le compartiment, la zone " amont " étant donc la zone s'étendant entre la zone où s'effectue l'alimentation en matières vitrifiables jusqu'au seuil, la zone " aval " débutant à partir du seuil jusqu'au(x) compartiment(s) prolongeant le compartiment de fusion et d'affinage jusqu'à l'installation de formage. Dans le sens de l'invention, on comprend par " seuil transversal " un mur immergé placé sur la sole sur la largeur du compartiment et disposé sensiblement transversalement à sa longueur, c'est-à-dire en fait sensiblement perpendiculairement au sens du courant de tirée du verre fondu.

Selon l'invention, on associe à ce premier moyen des moyens complémentaires de contrôle des flux convectifs, en zone " amont ", dont au moins des moyens auxiliaires de chauffage " amont " immergés localisés à proximité et en amont du seuil, la combinaison de ces moyens empêchant que le verre fondu parvenu dans la zone " aval " ne retourne dans la zone " amont ".

Ainsi, grâce à ces moyens complémentaires, le mur n'agit plus simplement comme un frein comme selon l'enseignement du brevet américain précité US-A-3 536 470, mais comme un obstacle quasiment infranchissable vis-à-vis du verre fondu une fois que celui-ci est passé en zone " aval ". Cela est extrêmement avantageux sur le plan de la consommation énergétique et de la qualité du verre : il n'y a plus à réchauffer, en zone amont, une certaine masse de verre fondu provenant de la zone « aval ». En outre, le verre qui a atteint la zone « aval » peut y subir son affinage, puis être évacué vers le compartiment suivant, de manière optimale, sans qu'il puisse être à nouveau entraîné en partie amont et, de fait, mis au contact de verre encore non affiné.

Dans la pratique, dans le cas d'un compartiment de fusion et d'affinage d'un four à flammes, l'essentiel de la puissance de chauffe est assuré par des brûleurs et on dispose de préférence le seuil transversal selon l'invention approximativement dans la zone du compartiment où s'établit naturellement le « point chaud » séparant les deux courroies de recirculation convective.

De fait, la combinaison du seuil et des moyens complémentaires selon l'invention autorise une maîtrise fine des flux convectifs, notamment de deux ordres : elle permet de séparer strictement les deux courroies de part et d'autre du seuil transversal, en empêchant, comme on l'a déjà vu, la seconde courroie, c'est-à-dire celle s'établissant dans la zone « aval » du seuil, de franchir ce seuil en faisant entrer à nouveau du verre fondu déjà totalement ou partiellement affiné en zone « amont ». Pour ce faire, elle fixe et stabilise la zone de résurgence dite « point chaud » entre les deux courroies, notamment à l'aplomb ou à proximité de ce seuil. L'invention a donc un effet très avantageux de stabilisation et de contrôle des courroies de recirculation convective qui s'établissent dans le compartiment, ce que la présence d'un seuil transversal seul ne peut assurer.

La localisation et la géométrie du seuil transversal ont de l'importance. Ainsi, on préfère disposer le seuil transversal à environ 1/3 à 2/3 de la longueur du compartiment de fusion et d'affinage. cela revient en fait à disposer le seuil, comme précédemment mentionné, à proximité de la zone où se situerait de manière plus ou moins stable, la zone de résurgence en l'absence de seuil. En amont, on a ainsi une zone consacrée majoritairement à la fusion des matières vitrifiables et, en aval de ce seuil, une zone consacrée majoritairement à l'affinage du verre un fois fondu.

Avantageusement, on choisit une configuration de seuil de façon à ce que sa hauteur soit au plus égale à la moitié de la profondeur de verre fondu dans le compartiment et, notamment d'une hauteur égale à environ un quart ou un tiers de cette hauteur de verre. En effet, l'efficacité du seuil n'implique pas qu'il soit très haut, et ce d'autant plus qu'il faut prendre en compte le fait que, très haut, il aurait tendance à se corroder plus rapidement.

On peut adopter différentes géométries pour ce seuil, la plus simple consiste à choisir une section parallèlépipédique, en lui donnant effectivement la forme d'un mur. On préfère cependant conférer à la section un profil à pans coupés ou arrondis. Cette dernière configuration permet en effet d'atténuer l'effet « d'ombre » lié à l'utilisation d'un mur, c'est-à-dire la création de zones de verre de cinétique plus lente et de température plus froide qu'ailleurs, à proximité de la base du seuil. On peut ainsi choisir une section de seuil où le sommet présente une surface plane ou arrondie, notamment convexe, et où les « flancs » dudit seuil sont inclinés par rapport à la verticale ou sont arrondis, avec une courbure convexe ou concave qui peut être variable sur la hauteur du seuil.

Dans ce dernier cas, on peut dimensionner le seuil avantageusement de manière à ce que la base du seuil soit plus grande que sa hauteur, notamment deux fois plus grande.

Les moyens complémentaires de contrôle des flux convectifs associés au seuil transversal peuvent comprendre, outre les moyens de chauffage « amont » , des bouillonneurs « amont » immergés à proximité et en amont du seuil transversal. Ils contribuent alors à affiner la stabilisation du point chaud et la séparation correcte des deux courroies de recirculation de part et d'autre du seuil.

Tous ces moyens de contrôle associés au seuil sont à disposer très près de ce dernier pour avoir sur lui une influence optimale. Ainsi, avantageusement, ils sont, en zone « amont », distants d'au plus 2000 mm, notamment d'au plus 1500 mm, de la base du seuil transversal.

Les moyens de chauffage « amont » faisant partie de ces moyens de contrôle sont de préférence sous la forme d'électrodes immergées, notamment fixées à la sole et de puissance calorifique totale d'au plus 1500 kW, notamment comprise entre 1200 et 500 kW. Concrètement, une ou deux rangées d'électrodes situées parallèlement au seuil peuvent suffire. Subsidiairement, ce chauffage localisé permet d'activer la convection de la première courroie de recirculation, celle qui se trouve en zone amont. La puissance calorifique est à réguler pour ajuster au mieux la localisation respective des deux courroies et du point chaud. Elle reste dans des gammes modérées, puisque ces moyens de chauffage n'ont pas vocation de compléter ou de venir se substituer aux moyens traditionnels de chauffage de matières vitrifiables dont est équipé le four, notamment sous forme de brûleurs.

Selon une réalisation préférée de l'invention, on peut additionnellement associer au seuil transversal des moyens de contrôle des flux convectifs se trouvant en zone « aval » du compartiment de fusion et d'affinage, ces moyens comprenant au moins des moyens auxiliaires de chauffage « aval » immergés, localisés à proximité et en aval dudit seuil. Ces moyens auxiliaires de chauffage se présentent avantageusement sous la forme d'électrodes immergées, notamment fixées à la sole et disposées en rangée(s). Pour être pleinement efficaces, ils sont distants d'au plus 1500 mm de la base du seuil transversal et leur puissance calorifique totale maximale est de préférence d'au plus 100 kW, notamment d'au plus 70 kW.

On peut attribuer à ces moyens de contrôle « aval » différentes fonctions, ces moyens venant en fait renforcer l'action des moyens de contrôle « amont » et du seuil transversal.

Ils contribuent d'une part à faciliter la séparation entre les courroies de recirculation convective de verre fondu, à empêcher que le verre fondu de la courroie qui s'établit en aval du seuil ne « repasse » en zone amont.

D'autre part, les moyens auxiliaires de chauffage « aval » faisant partie de ces moyens de contrôle ont une influence très bénéfique sur la masse de verre qui se trouve juste en aval du seuil et qui se trouve ainsi, en quelque sorte, dans une zone « d'ombre » au vu du sens d'écoulement global du verre fondu dans le compartiment : cette masse de verre, qui fait partie de la courroie de recirculation aval du compartiment a en effet tendance à présenter une température plus faible et une vitesse plus lente que dans le reste de la courroie, tendance intrinsèque à l'utilisation d'un seuil transversal qui joue le rôle d'un obstacle, bien que par ailleurs il présente des avantages, comme déjà vu.

Or cette zone « d'ombre », ainsi définie, peut s'avérer être un inconvénient, notamment quand on modifie le régime du four, quand on passe d'une composition verrière à une autre, par exemple pour passer d'une production de verre clair à une production de verre coloré. En effet, dans ces périodes de transition, il y a alors un risque que cette masse de verre « semi-stagnante » moins affinée, soit brutalement larguée hors du compartiment, et génère des défauts dans le verre fondu produit pendant un laps de temps non négligeable. En chauffant de manière modérée cette masse de verre, on pallie à ce problème, en rapprochant ses caractéristiques (température, vitesse) du reste de la courroie de recirculation « aval ». Il ne s'agit cependant pas de modifier radicalement les systèmes convectifs en « aval » du seuil, c'est la raison pour laquelle la puissance calorifique dégagée est préférentiellement peu élevée. Il s'agit en fait plutôt d'un ajustement, non pas d'un véritable chauffage influençant l'ensemble du verre fondu se trouvant en aval du seuil.

L'invention est particulièrement adaptée aux fours conçus avec un compartiment de fusion et d'affinage débouchant dans une succession de compartiments dont un compartiment intermédiaire formant goulot d'étranglement, puis un compartiment de conditionnement/homogénéisation du verre fondu et enfin un canal d'écoulement conduisant le verre à l'installation de formage.

Elle concerne principalement les fours où la fusion des matières vitrifiables est assurée, dans le compartiment de fusion et d'affinage, pour l'essentiel par des brûleurs.

Elle s'applique également principalement à des fours destinés à alimenter en verre des installations de formage de verre plat du type float.

L'invention a également pour objet le procédé de mise en oeuvre de ces fours, qui se caractérise par une régulation de fonctionnement des moyens complémentaires de contrôle des flux convectifs « amont », notamment la puissance calorifique des moyens auxiliaires de chauffage et/ou le débit gazeux des bouillonneurs associés au seuil transversal, afin de fixer de part et d'autre de ce seuil deux courroies de recirculation convective de verre fondu et de fixer leur « zone source », notamment à l'aplomb ou à proximité dudit seuil.

Cette régulation peut aussi être opérée sur les moyens de contrôle des flux convectifs en zone « aval » associés au seuil, notamment pour assurer une accélération et/ou un réchauffement contrôlés de la courroie de recirculation convective de verre fondu dans la zone « aval » du compartiment de fusion et d'affinage, dans la portion localisée en partie inférieure et à proximité de la base du seuil transversal.

D'autres caractéristiques et avantages de l'invention apparaissent dans la description détaillée d'un mode de réalisation non limitatif du four, à l'aide des figures suivantes qui représentent :
- **figure 1 :** une vue en coupe longitudinale de l'ensemble du four,
- **figure 2 :** une vue en plan de l'ensemble du four,
- **figure 3 :** une vue en coupe longitudinale du compartiment de fusion et d'affinage du four.

Toutes ces figures sont très schématiques et, pour faciliter leur lecture, ne respectent pas exactement l'échelle entre les différents éléments représentés.

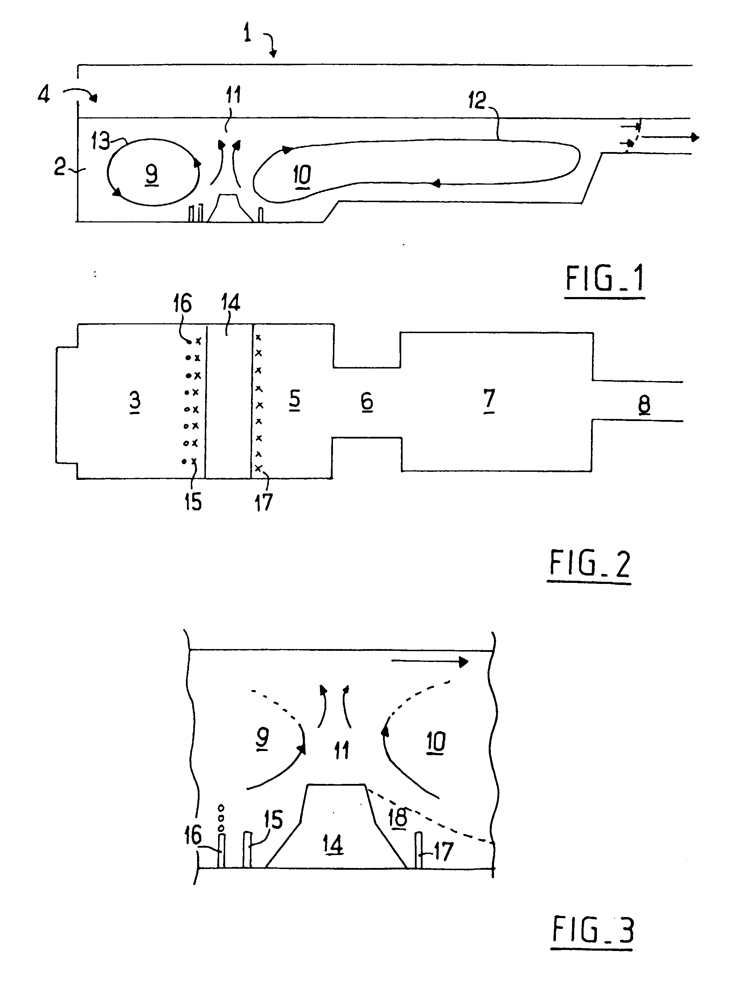

Les figures 1 et 2 représentent un four 1 de fusion dit « à flammes » ou encore « à régénérateurs » pour alimenter en verre fondu une installation de flottage (float). Il se décompose, de manière connue, en un premier bassin 2 de fusion/affinage où la puissance de chauffe est fournie par deux rangées de brûleurs (non représentés) fonctionnant avec un mélange fuel/air et en alternance. On peut noter que la puissance de chauffe pourrait tout aussi bien être fournie par des brûleurs à comburant oxygène et fonctionnant en continu, comme décrit dans la demande de brevet EP-A-0 650 934.

Ce bassin 2 comporte une zone « amont » de fusion 3 où se situe l'alimentation 4 en matières vitrifiables et une zone d'affinage « aval » 5, puis un compartiment intermédiaire 6 formant goulot d'étranglement désigné sous le terme de corset, puis un compartiment 7 d'homogénéisation et de conditionnement thermique et chimique du verre appelé braise. Enfin, la braise 7 débouche dans un canal d'écoulement 8 venant alimenter directement le bain de flottage non représenté.

Dans le compartiment 2 de fusion/affinage, et comme représenté avec plus de précision à la figure 3, s'établissent naturellement deux courroies principales 9, 10 de convection du verre, la zone de résurgence 11 entre les deux courroies correspondant à un « point chaud », alors que les extrémités 12, 13 opposées des deux courroies correspondent à des « points froids » dans la masse de verre fondu. « Chaud » et « froid » sont bien sûr, dans le contexte de l'invention, des termes très relatifs puisqu'ils se rapportent dans tous les cas à du verre en fusion, mais ils sont familiers à l'homme de l'art.

On note que la courroie 10 « aval » n'est pas forcément cantonnée dans le compartiment 2. Elle peut aussi passer dans au moins une partie du compartiment suivant. Dans le cas représenté, elle s'étend en effet jusqu'au corset 6 et jusqu'à tout ou partie de la longueur de la braise 7.

La présence d'un seuil transversal 14 s'étendant sur toute la largeur du compartiment 2 et associé, en amont, à une rangée transversale 15 d'électrodes immergées doublée d'une rangée 16 de bouillonneurs permet de fixer, de stabiliser les deux courroies 9, 10 de façon à ce que la zone de résurgence 11 dite « point chaud » se trouve approximativement à l'aplomb du seuil 14. Concrètement, on empêche ainsi que du verre fondu en cours d'affinage, se trouvant dans la zone aval 5 du compartiment 2 ne repasse au-dessus du seuil vers la zone amont 3. Ainsi, on supprime, ou tout au moins, on réduit considérablement, tout courant de retour du verre d'une zone à l'autre, en cantonnant la seconde courroie convective en zone aval 5. Cela est intéressant pour au moins deux raisons : d'une part, on évite de chauffer à nouveau le verre déjà passé en zone aval qui reviendrait en zone amont, et on réduit ainsi la consommation énergétique du four. D'autre part, le verre en zone aval est déjà totalement ou partiellement affiné, il n'est donc pas judicieux qu'il se mêle à nouveau à du verre de la zone amont non encore affiné.

Le seuil transversal 14 est disposé à environ les 2/3 de la longueur du bassin 2, et il est d'une hauteur correspondant à environ un tiers de la profondeur du verre. Cette hauteur lui donne suffisamment d'efficacité au vu du but de l'invention et, très haut, le seuil risquerait de s'user prématurément. Les électrodes 15 sont distantes de sa base d'environ 1000 mm, elles peuvent fonctionner en permanence ou n'être activées que par intermittence, elles ont une puissance calorifique totale maximale d'environ 1000 kW, et sont régulées de manière appropriée.

Le seuil 14 présente un profil à pans coupés, afin d'entraver au minimum la circulation du verre fondu dans les courroies dans leurs zones proches de la base du seuil, ces pans coupés présentant un angle d'inclinaison par rapport à la verticale qui diminue en se rapprochant du sommet du mur. Le sommet présente une surface horizontale dans le sens de la largeur, et dont la largeur correspond à environ un tiers ou un quart de la largeur de la base du seuil. Le seuil peut-être monobloc. Pour des raisons technologiques, ici il est en fait constitué de plusieurs blocs de céramique accolés les uns aux autres.

Le seuil 14 est également associé à une rangée transversale d'électrodes 17 « aval », situées à moins de 800 mm de la base du seuil. Ces électrodes 17 fournissent ainsi un apport calorifique modeste mais dans une zone 18 de la courroie de recirculation aval 10 relativement « sensible », cette zone 18, dans « l'ombre » du seuil 14 a en effet tendance à avoir une vitesse ralentie et une température plus faible que dans le reste de la courroie, ce qui n'est pas optimal pour le fonctionnement du four, car ce verre de caractéristiques différentes, peu « brassé », est susceptible de présenter des défauts que l'on retrouve en sortie du four, notamment lorsqu'on passe d'une composition de matières vitrifiables à une autre. Ces électrodes 17 permettent de rapprocher vitesse et température de cette zone 18 du reste de la courroie 10, et de fait, de supprimer tout risque de défaut dans le verre ayant pour origine cette zone 18.

La puissance de chauffe de ces électrodes 17 est cependant à contrôler précisément, car une puissance calorifique trop importante pourrait conduire à une surchauffe localisée du verre pouvant entraîner des risques d'apparition de défauts, notamment de bulles, dans du verre déjà affiné. Comme les électrodes 17, elles peuvent fonctionner en permanence, à plein régime ou en régime modulé, ou encore par intermittences suivant les besoins, notamment en prévision de changement de régime du four.

On peut noter également que ces électrodes 17 aval participent aussi à la stabilisation et à la fixation de la localisation du point chaud, particulièrement ici où l'on utilise en amont des bouillonneurs 16. Elles équilibrent, ajustent l'effet des bouillonneurs 16 amont sur la seconde courroie 10, afin d'assurer son cantonnement en zone aval.

Les électrodes « amont » 15 et/ou les électrodes « aval » 17 peuvent être disposées extrêmement près de la base du seuil 14. On peut pour, ce faire, utiliser des blocs en céramique auxiliaires, spécifiques, non représentés, équipés de manière adéquate et qui sont disposés juste de part et d'autre de la base du seuil 14.

## Revendications

1. Four (1) pour la fusion de matières vitrifiables comportant des moyens primaires de chauffage, un compartiment (2) de fusion et d'affinage du verre muni, en amont, d'au moins un moyen d'alimentation (4) en matières vitrifiables et débouchant, en aval, dans un compartiment ou une succession de compartiments (6-7-8) destiné(s) à conduire le verre fondu jusqu'à la zone de formage, ledit compartiment (2) de fusion et d'affinage étant muni d'un premier moyen de contrôle des flux convectifs animant la masse de verre fondu sous la forme d'un seuil transversal (14) délimitant une zone " amont " (3) et une zone "aval" (5), **caractérisé en ce qu'**on associe audit seuil transversal des moyens complémentaires de contrôle des flux convectifs en zone " amont " dont au moins des moyens auxiliaires de chauffage (15) " amont " immergés localisés à proximité et en amont du seuil, afin d'empêcher le retour de verre fondu parvenu dans ladite zone " aval " vers ladite zone " amont ".

2. Four (1) selon la revendication 1, **caractérisé en ce que** le seuil transversal (14) et les moyens complémentaires de contrôle des flux convectifs (15-16) sont conçus de manière à ce que s'établissent deux courroies de recirculation convective (9-10) du verre séparées, de part et d'autre du seuil transversal (14).

3. Four (1) selon la revendication 2, **caractérisé en ce que** le seuil transversal (14) et les moyens complémentaires de contrôle des flux convectifs (15-16) sont conçus de manière à ce que la " zone source " (11) entre les deux courroies de recirculation (9-10) convective se fixe à l'aplomb ou à proximité du seuil transversal (14).

4. Four (1) selon l'une des revendications précédentes, **caractérisé en ce que** le seuil transversal (14) est disposé à 1/3 à 2/3 de la longueur du compartiment (2) de fusion et d'affinage.

5. Four (1) selon l'une des revendications précédentes, **caractérisé en ce que** le seuil transversal (14) a une hauteur au plus égale à la moitié de la profondeur de verre fondu dans le compartiment (2) de fusion et d'affinage, notamment d'une hauteur égale à environ un quart ou un tiers de ladite profondeur.

6. Four (1) selon l'une des revendications précédentes, **caractérisé en ce que** le seuil transversal (14) présente une section parallèlépipédique ou arrondie ou à pans coupés.

7. Four (1) selon l'une des revendications précédentes, **caractérisé en ce que** la base du seuil transversal (14) est plus grande que sa hauteur, la base étant notamment environ deux fois plus grande que sa hauteur.

8. Four (1) selon l'une des revendications précédentes, **caractérisé en ce que** les moyens complémentaires de contrôle des flux convectifs comprennent également des bouillonneurs (16) « amont » immergés à proximité et en amont du seuil transversal (14).

9. Four (1) selon l'une des revendications précédentes, **caractérisé en ce que** les moyens complémentaires (15-16) de contrôle des flux convectifs en zone amont sont distants d'au plus 2000 mm, notamment d'au plus 1500 mm de la base du seuil transversal (14).

10. Four (1) selon l'une des revendications précédentes, **caractérisé en ce que** les moyens de chauffage « amont » sont des électrodes (15) immergées, notamment fixées à la sole du compartiment de fusion et d'affinage et de puissance calorifique totale maximale d'au plus 1500 kW, notamment comprise entre 1200 kW et 500 kW.

11. Four (1) selon l'une des revendications précédentes, **caractérisé en ce qu**'on associe également au seuil transversal (14) des moyens de contrôle des flux convectifs en zone « aval », dont au moins des moyens auxiliaires de chauffage (17) « aval » immergés localisés à proximité et en aval dudit seuil.

12. Four (1) selon la revendication 11, **caractérisé en ce que** les moyens auxiliaires de chauffage « aval » (17) sont distants d'au plus 1500 mm de la base du seuil transversal (14).

13. Four (1) selon la revendication 11 ou la revendication 12, **caractérisé en ce que** les moyens auxiliaires de chauffage « aval » (17) sont des électrodes immergées, notamment fixées à la sole et de puissance calorifique totale maximale d'au plus 100 kW, notamment d'au plus 70 kW.

14. Four (1) selon l'une des revendications précédentes, **caractérisé en ce que** le compartiment (2) de fusion et d'affinage débouche dans une succession de compartiments dont un compartiment intermédiaire (6) formant goulot d'étranglement, puis un compartiment (7) de conditionnement /homogénéisation puis un canal d'écoulement (8) conduisant à l'installation de formage.

15. Four (1 ) selon l'une des revendications précédentes, **caractérisé en ce que** la fusion des matières vitrifiables est assurée dans le compartiment (2) de fusion et d'affinage, pour l'essentiel, par des brûleurs.

16. Application du four (1) selon l'une des revendications précédentes à l'alimentation en verre fondu d'installations de formage de verre plat du type installations de verre float.

17. Procédé de mise en oeuvre du four (1) selon l'une des revendications 1 à 15, **caractérisé en ce qu**'on régule le fonctionnement des moyens complémentaires de contrôle des flux convectifs (15) en zone « amont », dont la puissance calorifique des moyens auxiliaires de chauffage « amont » et le débit gazeux des bouillonneurs (16) « amont » associés au seuil transversal (14), afin de fixer deux courroies de recirculation (9-10) convective de verre fondu de part et d'autre du seuil transversal (14) et de fixer leur « zone source » (11), notamment à l'aplomb dudit seuil (14).

18. Procédé selon la revendication 17, **caractérisé en ce qu'**on régule le fonctionnement des moyens de contrôle des flux convectifs en zone « aval » dont la puissance calorifique des moyens auxiliaires de chauffage « aval » (17) associés au seuil transversal (14), notamment pour assurer une accélération et un réchauffement contrôlés de la courroie de recirculation convective (10) de verre fondu dans la zone « aval » du compartiment (2) de fusion et d'affinage, dans la portion (18) localisée en partie inférieure et à proximité du seuil transversal (14).

## Claims

1. Furnace (1) for melting vitrifiable materials, comprising primary heating means, a compartment (2) for melting and fining the glass, which compartment is provided, upstream, with at least one means (4) for supplying vitrifiable materials and which leads, downstream, into a compartment or a succession of compartments (6-7-8) which is (are) to guide the molten glass as far as the forming region, the compartment (2) for melting and fining being provided with a first means for controlling the convection streams moving the mass of molten glass, which first means is in the form of a transverse threshold (14) delimiting an "upstream" region (3) and a "downstream" region (5), characterised in that there are associated with the transverse threshold complementary means for controlling the convection streams in the "upstream" region, including at least submerged "upstream" auxiliary heating means (15) located in the vicinity of and upstream of the threshold, in order to prevent the return towards the "upstream" region of molten glass which has reached the "downstream" region.

2. Furnace (1) according to claim 1, characterised in that the transverse threshold (14) and the complementary means (15-16) for controlling the convection streams are designed in such a manner that two separate belts (9-10) for the convective recirculation of the glass are formed one on each side of the transverse threshold (14).

3. Furnace (1) according to claim 2, characterised in that the transverse threshold (14) and the complementary means (15-16) for controlling the convection streams are designed in such a manner that the "source region" (11) between the two convective recirculation belts (9-10) is arranged plumb with or in the vicinity of the transverse threshold (14).

4. Furnace (1) according to any one of the preceding claims, characterised in that the transverse threshold (14) is arranged 1/3 to 2/3 of the way along the melting and fining compartment (2).

5. Furnace (1) according to any one of the preceding claims, characterised in that the transverse threshold (14) has a height at most equal to half the depth of the molten glass in the melting and fining compartment (2), especially a height equal to approximately one quarter or one third of that depth.

6. Furnace (1) according to any one of the preceding claims, characterised in that the transverse threshold (14) has a parallelepipedal or rounded or bevelled cross-section.

7. Furnace (1) according to any one of the preceding claims, characterised in that the base of the transverse threshold (14) is larger than its height, the base being especially approximately twice as large as its height.

8. Furnace (1) according to any one of the preceding claims, characterised in that the complementary means for controlling the convection streams also comprise immersed "upstream" gassing devices (16) in the vicinity of and upstream of the transverse threshold (14).

9. Furnace (1) according to any one of the preceding claims, characterised in that the complementary means (15-16) for controlling the convection streams in the upstream region are at a distance of at most 2000 mm, especially at most 1500 mm, from the base of the transverse threshold (14).

10. Furnace (1) according to any one of the preceding claims, characterised in that the "upstream" heating means are submerged electrodes (15), especially secured to the bottom of the melting and fining compartment and having a maximum total heating power of at most 1500 kW, especially from 1200 kW to 500 kW.

11. Furnace (1) according to any one of the preceding claims, characterised in that there are also associated with the transverse threshold (14) means for controlling the convection streams in the "downstream" region, including at least submerged "downstream" auxiliary heating means (17) located in the vicinity of and downstream of the threshold.

12. Furnace (1) according to claim 11, characterised in that the "downstream" auxiliary heating means (17) are at a distance of at most 1500 mm from the base of the transverse threshold (14).

13. Furnace (1) according to claim 11 or claim 12, characterised in that the "downstream" auxiliary heating means (17) are submerged electrodes, especially secured to the bottom and having a maximum total heating power of at most 100 kW, especially at most 70 kW.

14. Furnace (1) according to any one of the preceding claims, characterised in that the melting and fining compartment (2) leads into a succession of compartments, including an intermediate compartment (6) forming a bottleneck, then a conditioning/homogenising compartment (7) and then a flow duct (8) leading to the forming installation.

15. Furnace (1) according to any one of the preceding claims, characterised in that the melting of the vitrifiable materials is carried out in the melting and fining compartment (2) basically by burners.

16. Application of the furnace (1) according to any one of the preceding claims to the supply of molten glass to installations for forming flat glass of the float glass installation type.

17. Method for using the furnace (1) according to any one of claims 1 to 15, characterised in that the operation of the complementary means (15) for controlling the convection streams in the "upstream" region, including the heating power of the "upstream" auxiliary heating means and the gas flow rate of the "upstream" gassing devices (16) associated with the transverse threshold (14), is regulated in order to fix two belts (9-10) for the convective recirculation of molten glass, one on each side of the transverse threshold (14), and to fix their "source region" (11), especially plumb with the threshold (14).

18. Method according to claim 17, characterised in that the operation of the means for controlling the convection streams in the "downstream" region, including the heating power of the "downstream" auxiliary heating means (17) associated with the transverse threshold (14), is regulated especially in order to ensure controlled acceleration and reheating of the belt (10) for the convective recirculation of molten glass in the "downstream" region of the melting and fining compartment (2), in the portion (18) located at the lower part and in the vicinity of the transverse threshold (14).

## Patentansprüche

1. Ofen (1) zum Schmelzen von Glasmaterialien, umfassend primäre Heizmittel, ein Abteil (2) zum Schmelzen und zur Läuterung des ausgestatteten Glases mit mindestens einem Mittel zur Versorgung (4) von Glasmaterialien das, abwärtsgerichtet, in ein Abteil oder eine Aufeinanderfolge von Abteilen (6-7-8) einmündet, das/die dazu bestimmt ist/sind, das geschmolzene Glas bis in den Bereich der Formgebung zu leiten, wobei das Abteil (2) zum Schmelzen und zur Läuterung mit einem ersten Mittel zur Kontrolle der konvektiven Flüsse ausgerüstet ist, das die Masse des geschmolzenen Glases in der Form einer querliegenden Schwelle (14) in Bewegung setzt, wobei es einen "aufwärtsgerichteten" (3) und einen "abwärtsgerichteten" Bereich (5) abgrenzt, dadurch gekennzeichnet, daß mit der querliegenden Schelle zusätzliche Mittel zur Kontrolle der konvektiven Flüsse im "aufwärtsgerichteten" Bereich verbunden werden, davon mindestens Hilfsmittel zur "aufwärtsgerichteten" Heizung (15) die in der Umgebung angebracht und von der Schwelle aufwärtsgerichtet eingetaucht sind, um den Rückfluß des geschmolzenen Glases, das in den "abwärtsgerichteten" Bereich gelangt ist, in den "aufwärtsgerichteten" Bereich zu verhindern.

2. Ofen (1) nach Anspruch 1, dadurch gekennzeichnet, daß die querliegende Schwelle (14) und die zusätzlichen Mittel zur Kontrolle der konvektiven Flüsse (15-16) so konstruiert sind, daß sich zwei getrennte Umläufe der konvektiven Rückführung (9-10) des Glases auf beiden Seiten der querliegenden Schwelle (14) bilden.

3. Ofen (1) nach Anspruch 2, dadurch gekennzeichnet, daß die querliegende Schwelle (14) und die zusätzlichen Mittel zur Kontrolle der konvektiven Flüsse (15-16) so konstruiert sind, daß der "Quellenbereich" (11) zwischen den zwei Umläufen der konvektiven Rückführung (9-10) auf der Lotgeraden oder in der Nähe der querliegenden Schwelle (14) befestigt wird.

4. Ofen (1) nach einem der vorhergehenden Ansprüche, dadurch gekennzeichnet, daß die querliegende Schwelle (14) bei 1/3 bis 2,3 der Länge des Abteils (2) zum Schmelzen und zur Läuterung angebracht ist.

5. Ofen (1) nach einem der vorhergehenden Ansprüche, dadurch gekennzeichnet, daß die querliegende Schwelle (14) eine Höhe aufweist, die höchstens gleich der Hälfte der Tiefe des geschmolzenen Glases im Abteil (2) zum Schmelzen und zur Läuterung ist, insbesondere einer Höhe, die gleich ungefähr eines Viertels oder eines Drittels der Tiefe ist.

6. Ofen (1) nach einem der vorhergehenden Ansprüche, dadurch gekennzeichnet, daß die querliegende Schwelle (14) einen parallelepipedischen oder abgerundeten Schnitt oder einen Schnitt mit abgeschnittenen Flächen aufweist.

7. Ofen (1) nach einem der vorhergehenden Ansprüche, dadurch gekennzeichnet, daß die Grundfläche der querliegenden Schwelle (14) größer als ihre Höhe ist, wobei die Grundfläche insbesondere zweimal größer als ihre Höhe ist.

8. Ofen (1) nach einem der vorhergehenden Ansprüche, dadurch gekennzeichnet. daß die zusätzlichen Mittel zur Kontrolle der konvektiven Flüsse auch "aufwärtsgerichtete" Rohre mit Blasdüsen (16) umfassen, die in der Nähe und von der querliegenden Schwelle (14) aufwärtsgerichtet eingetaucht sind.

9. Ofen (1) nach einem der vorhergehenden Ansprüche, dadurch gekennzeichnet, daß die zusätzlichen Mittel (15-16) zur Kontrolle der konvektiven Flüsse im aufwärtsgerichteten Bereich höchstens 2000 mm voneinander entfernt sind. insbesondere höchstens 1500 mm von der Grundfläche der querliegenden Schwelle (14).

10. Anbringung des Ofens (1) nach einem der vorhergehenden Ansprüche an die Versorgung der Anlagen zur Formung von Flachglas des Typs der Anlagen von Floatglas mit geschmolzenem Glas.

11. Verfahren des Einbaus des Ofens (1) nach einem der Ansprüche 1 bis 15, dadurch gekennzeichnet, daß die Funktionsweise der zusätzlichen Mittel zur Kontrolle der konvektiven Flüsse (15) im "aufwärtsgerichteten" Bereich reguliert wird, davon der Heizwert der "aufwärtsgerichteten" Hilfsmittel und die Gasströmungsgeschwindigkeit der "aufwärtsgerichteten" Rohre mit Blasdüsen (16), die mit der querliegenden Schwelle (14) verbunden sind, um zwei Umläufe zur konvektiven Rückführung (9-10) von geschmolzenem Glas auf beiden Seiten der querliegenden Schwelle (14) und ihren "Quellenbereich" (11) zu befestigen, insbesondere an der Lotgeraden der Schwelle (14).

12. Verfahren nach Anspruch 17, dadurch gekennzeichnet, daß die Funktionsweise der Mittel zur Kontrolle der konvektiven Flüsse im "abwärtsgerichteten" Bereich geregelt wird, davon der Heizwert der Hilfsmittel zur "abwärtsgerichteten" Heizung (17), die mit der querliegenden Schwelle (14) verbunden sind, besonders, um eine Beschleunigung und eine kontrollierte Erhitzung des Umlaufs zur konvektiven Rückführung (10) des geschmolzenen Glases in den "abwärtsgerichteten" Bereich des Abteils (2) zur Schmelzung und zur Läuterung in dem im unteren Teil lokalisierten Abschnitt (18) und in der Nähe der querliegenden Schwelle (14) sicherzustellen.
